# EUROPEAN PATENT APPLICATION

(11) **EP 2 269 753 A1**
(43) Date of publication of application: **05.01.2011**
(21) Application number: 09008769.3
(22) Date of filing: 03.07.2009
(51) Int. Cl.: B23B 31/107

(54) **Tool device having different tool blades**

(71) Applicant: Wang, Teng-Hung, Tainan City (TW)
(72) Inventor: Wang, Teng-Hung, Tainan City (TW)
(74) Representative: Kador & Partner

(57) **Abstract**

A tool device includes a tool member having a shank engaged into a chamber (23) of a barrel (20) and secured to the barrel with a fastener (27,28), and having a free end, and having two different tool blades (36,37) formed on the free end of the tool member for conducting different machining operations, such as boring, taping, threading milling, or cutting operations, the tool member includes a reference line (38) formed and arranged between the tool blades, and includes a ramp (34) formed in the shank for engaging with the fastener which solidly secures the tool member to the barrel, the barrel and the tool member include flat surfaces (22) engaged with each other to prevent the tool member from rotating relative to the barrel.

## Description

### BACKGROUND OF THE INVENTION

### 1. Field of the Invention

The present invention relates to a tool device for a machine tool, and more particularly to a tool device including two different cutting edges or tool blades for conducting different machining operations or procedures and for allowing the tool device and the machine tool apparatus to be easily operated by the users.

### 2. Description of the Prior Art

Typical machine tools comprise a turret or headstock disposed on top of a bed, and a tool supporting mechanism movably disposed on top of the bed for supporting the tool members and for moving or operating the tool members to machine or to work on the work pieces.

For example, U.S. Patent No. 4,412,571 to Czerniewicz discloses one of the typical power chisels for the typical machine tool apparatuses including chisel members and scoring members and sloping grooves formed on one end of a shank portion of a cutting member for conducting a cutting or boring operation.

However, normally, the shank portion of the cutting member and thus the chisel members and the scoring members and the sloping grooves will be rotated relative to the typical machine tools and may only be used to conduct one single cutting or boring operation, but may not be used to conduct the other machining operations. For conducting the other machining operations, the original tool members or tool devices are required to be disengaged or removed from the typical machine tools, and the other tool members or tool devices are required to be attached to the typical machine tools, such that a long time and a complicated changing procedure are required to change or to replace the tool members or tool devices.

U.S. Patent No. 7,300,231 to Liu discloses another typical machine tool apparatus also comprising a tool supporting or carrying mechanism for adjustably supporting the tool members on a machine base or bed.

However, similarly, it may also take a long time to change or to replace the tool members or tool devices.

The present invention has arisen to mitigate and/or obviate the afore-described disadvantages of the conventional tool devices for the machine tool apparatuses.

### SUMMARY OF THE INVENTION

The primary objective of the present invention is to provide a tool device including two different cutting edges or tool blades for conducting different machining operations or procedures and for allowing the tool device and the machine tool apparatus to be easily operated by the users.

In accordance with one aspect of the invention, there is provided a tool device comprising a barrel including a chamber formed therein, and a tool member including a shank engaged into the chamber of the barrel and secured to the barrel with a fastener, and including a free end having two different tool blades formed on the free end of the tool member for conducting different machining operations.

The tool blades are selected from boring, taping, threading milling, or cutting tool blades. The tool member includes a reference line formed and arranged between the tool blades. The tool member includes a ramp formed in the shank for engaging with the fastener.

The barrel includes a flat surface formed therein, and the tool member includes a flat surface formed therein and engaged with the flat surface of the barrel to secure the tool member to the barrel and to prevent the tool member from rotating relative to the barrel.

The tool member includes an anchoring shoulder formed therein, and the barrel includes a front end engaged with the anchoring shoulder of the tool member for anchoring the tool member to the barrel and for preventing the tool member from sliding longitudinally relative to the barrel.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is an exploded view of a tool device in accordance with the present invention;
FIG. 2 is a perspective view of the tool device;
FIG. 3 is a cross sectional view of the tool device taken along lines 3-3 of FIG. 2;
FIG. 4 is a perspective view illustrating a tool member of the tool device;
FIG. 5 is a partial perspective view illustrating the operation of the tool device;
FIG. 6 is an end schematic view illustrating the operation of the tool device;
FIG. 7 is a partial cross sectional view of the tool device taken along lines 7-7 of FIG. 6;
FIG. 8 is a partial perspective view similar to FIG. 5 illustrating the other operation of the tool device;
FIG. 9 is a partial cross sectional view of the tool device as shown in FIG. 8;
FIG. 10 is another exploded view similar to FIG. 1 illustrating the other arrangement of the tool device;
FIG. 11 is a further exploded view similar to FIGS. 1 and 10 illustrating the further arrangement of the tool device;
FIG. 12 is another perspective view similar to FIG. 4 illustrating the other arrangement of the tool device;
FIG. 13 is a further perspective view similar to FIGS. 4 and 12 illustrating the further arrangement of the tool device;
FIGS. 14, 15 are side plan schematic views illustrating the examples of the tool device; and
FIGS. 16, 17 are end schematic views of the tool devices as shown in FIGS. 14, 15 respectively.

### DETAILED DESCRIPTION OF THE PREFERRED EMBODIMENT

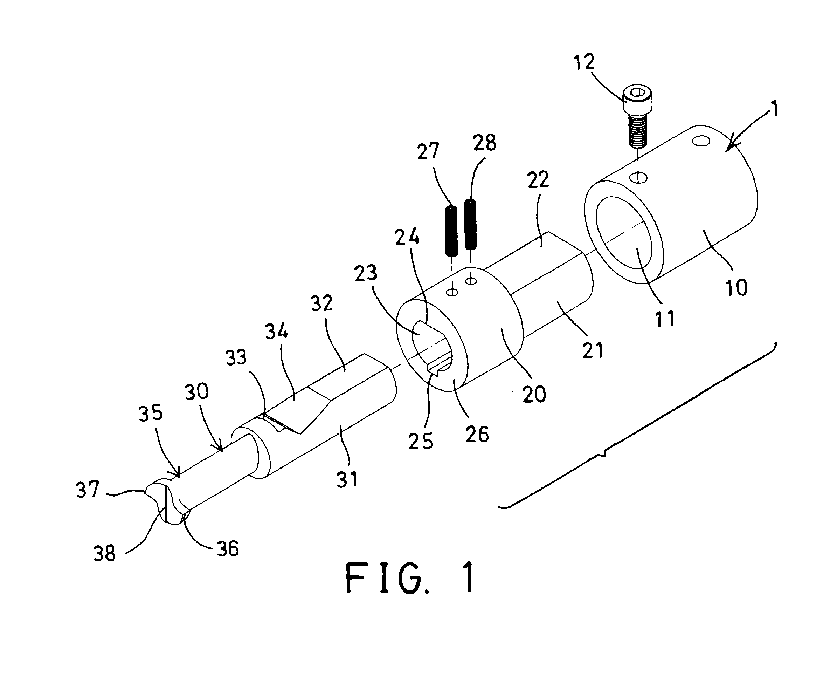

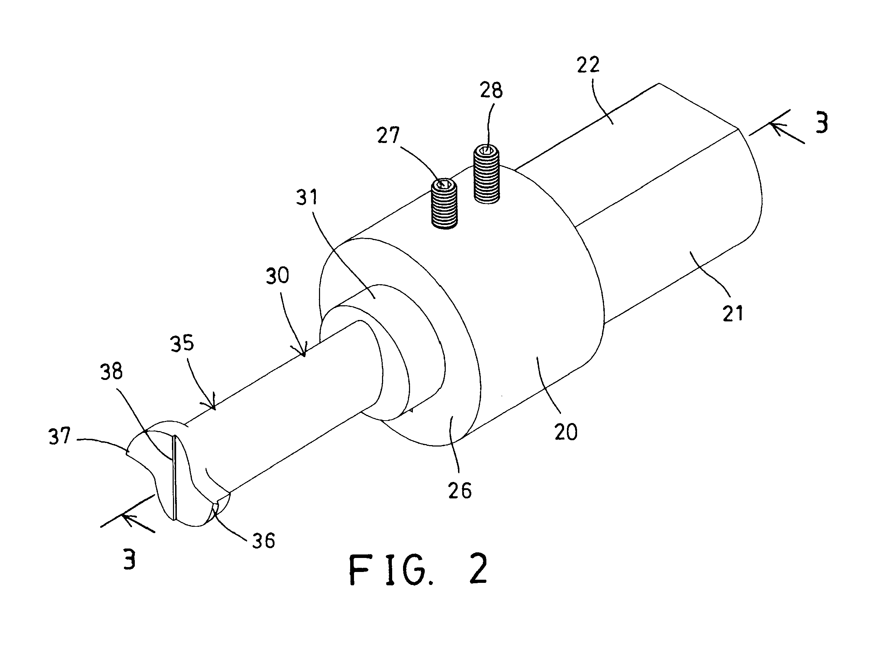

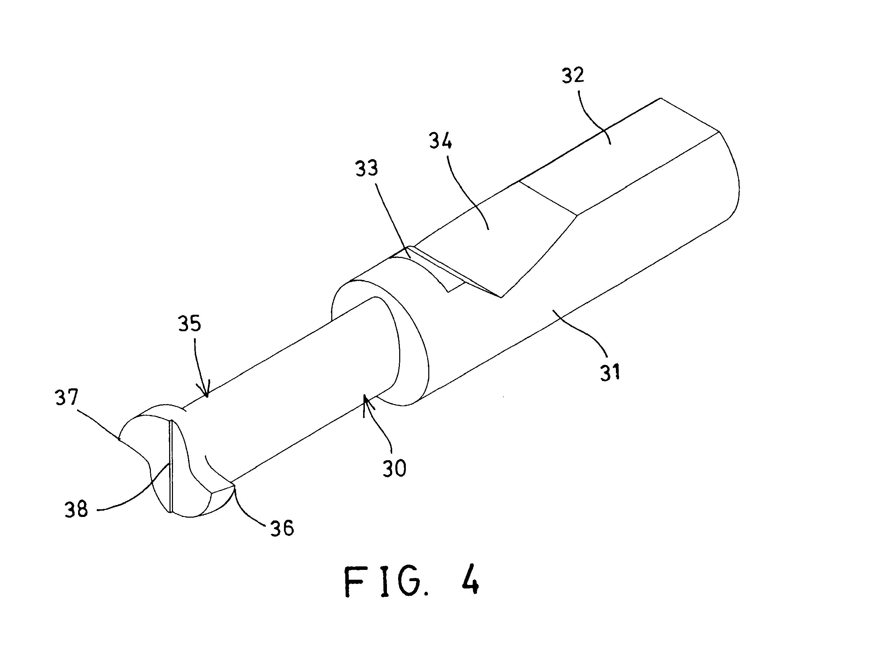

Referring to the drawings, and initially to FIGS. 1-4, a tool device in accordance with the present invention comprises a tool holder 1 for coupling or attaching or mounting onto a carrier or a base of a machine tool (not shown) and including a tubular member or housing 10 having a bore 11 formed therein for receiving or attaching or mounting a holding member or barrel 20, for example, the barrel 20 includes a stem 21 engaged into the bore 11 of the housing 10, and includes a cut off portion or flat surface 22 formed or provided in the stem 21 for engaging with a latch or fastener 12 which is engaged with or through the housing 10 and engaged with the flat surface 22 of the stem 21 of the barrel 20 for solidly securing the stem 21 of the barrel 20 to the housing 10 and for preventing the stem 21 of the barrel 20 from rotating relative to the housing 10.

The holding member or barrel 20 includes a noncircular chamber 23 formed therein and having one or more flat surfaces 24 formed or provided therein for receiving or engaging with a shank 31 of a tool member 30 which may be formed by grinding or machining processes. For example, the tool member 30 includes one or more cut off portions or flat surfaces 32 formed or provided in the shank 31 1 for forming an anchoring shoulder 33 in the shank 31 and for engaging with the corresponding flat surfaces 24 of the barrel 20 and for preventing the shank 31 of the tool member 30 from rotating relative to the barrel 20 and the housing 10, and includes a wedge-shaped or inclined ramp 34 formed therein. The holding member or barrel 20 may further include a longitudinal slot 25 formed therein and preferably disposed or arranged opposite to the flat surfaces 24 of the barrel 20.

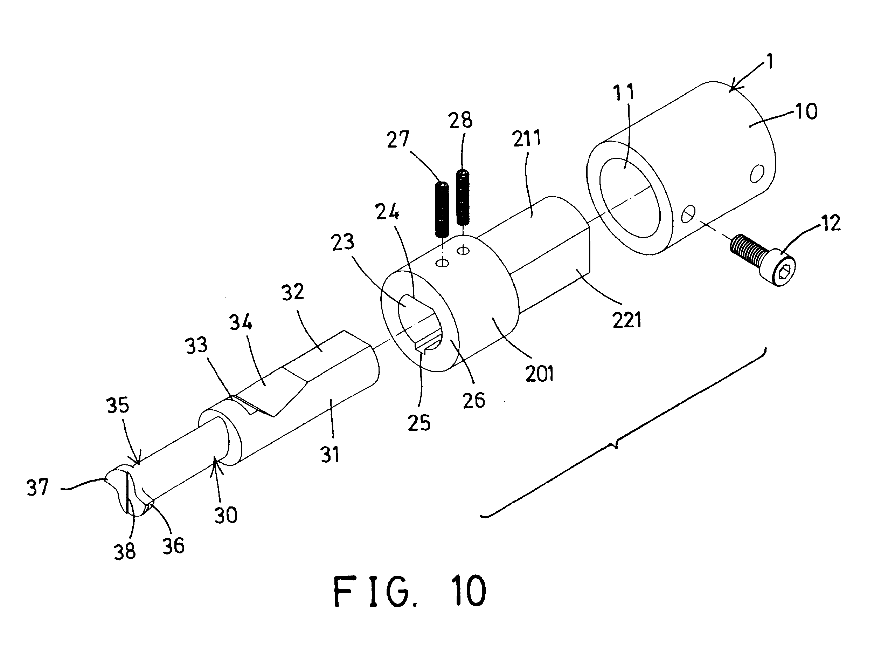

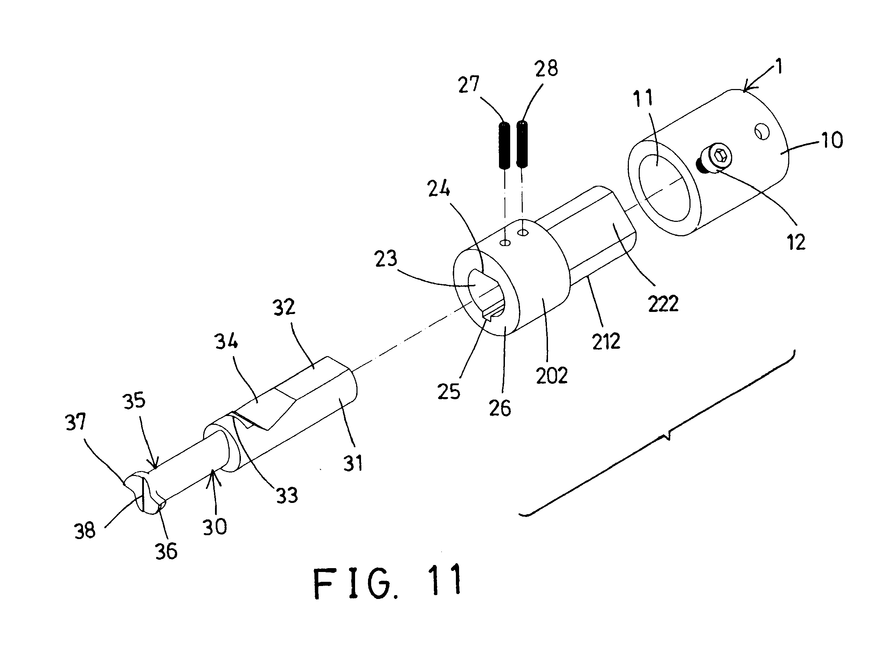

Alternatively, as shown in FIG. 10, the flat surface 221 of the stem 211 of the barrel 201 may be formed or provided at different angular position relative to the flat surfaces 24 and/or the slot 25 of the barrel 201, or angularly offset from the flat surfaces 24 and/or the slot 25 of the barrel 201 for suitably engaging with the fastener 12, similarly, as shown in FIG. 11, the flat surface 222 of the stem 212 of the barrel 202 may also be formed or provided at different angular position relative to the flat surfaces 24 and/or the slot 25 of the barrel 20, or angularly offset from the flat surfaces 24 and/or the slot 25 of the barrel 20, and at different angular position relative to the flat surface 221 of the stem 211 of the barrel 201 as shown in FIG. 10, for suitably engaging with the fastener 12.

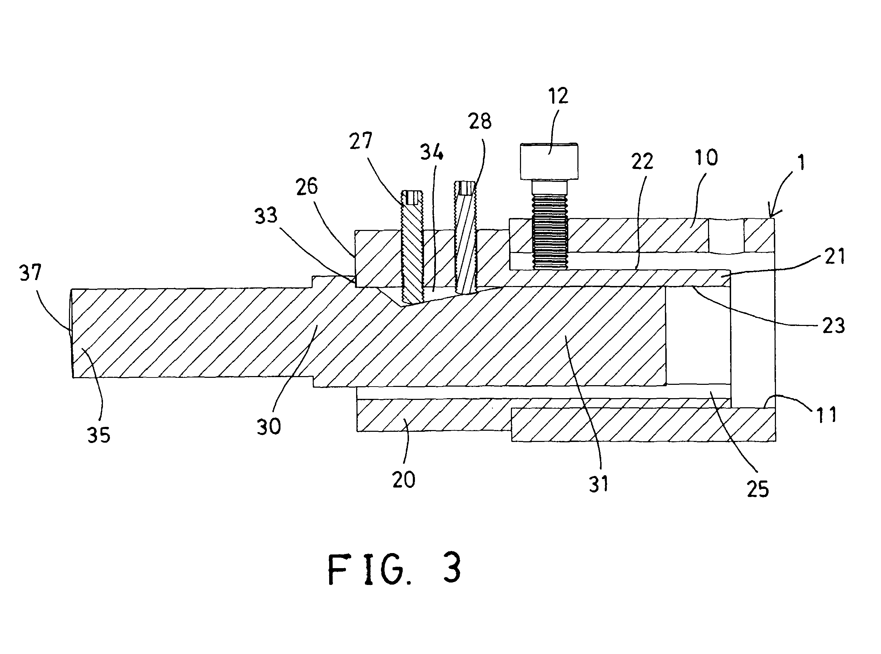

One or more further fasteners 27, 28 may be engaged through the barrel 20 and engaged into the noncircular chamber 23 of the barrel 20 and engageable with the ramp 34 of the shank 31 or of the tool member 30 (FIG. 3) for solidly securing the shank 31 of the tool member 30 to the barrel 20 and thus to the housing 10. The one end or front end 26 of the barrel 20 may be forced to engage with the anchoring shoulder 33 of the shank 31 of the tool member 30 by the fasteners 27, 28 in order to solidly anchor and position and secure the tool member 30 to the barrel 20 and to prevent the tool member 30 from sliding longitudinally relative to the barrel 20 and thus the housing 10.

The tool member 30 includes one end or front end or free end 35 having two different cutting edges or tool blades 36, 37 formed or provided on the front end 35 of the tool member 30 for conducting different machining operations or procedures, such as boring tool blades, taping or threading tool blades, milling tool blades, cutting tool blades, etc., and for allowing the different cutting edges or tool blades 36, 37 of the tool member 30 to conduct different machining operations or procedures without changing or replacing or attaching and disengaging the tool member 30 from the barrel 20 and the housing 10. It is preferable that the tool member 30 includes a datum or center or reference line 38 formed or provided on the front end 35 of the tool member 30 and preferably disposed or arranged between the cutting edges or tool blades 36, 37. It is preferable that the tool blades 36, 37 of the tool member 30 are formed by grinding technical processes.

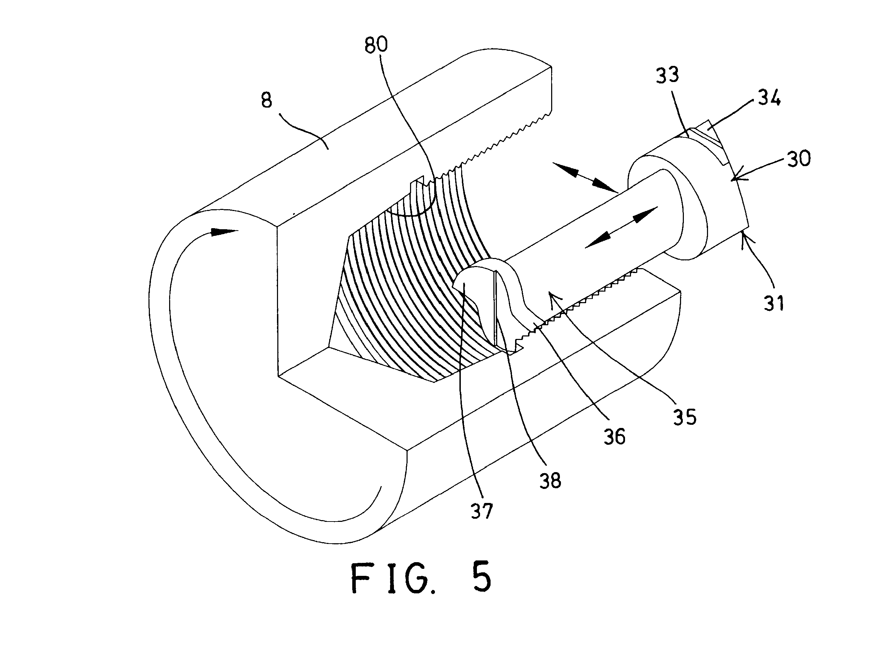

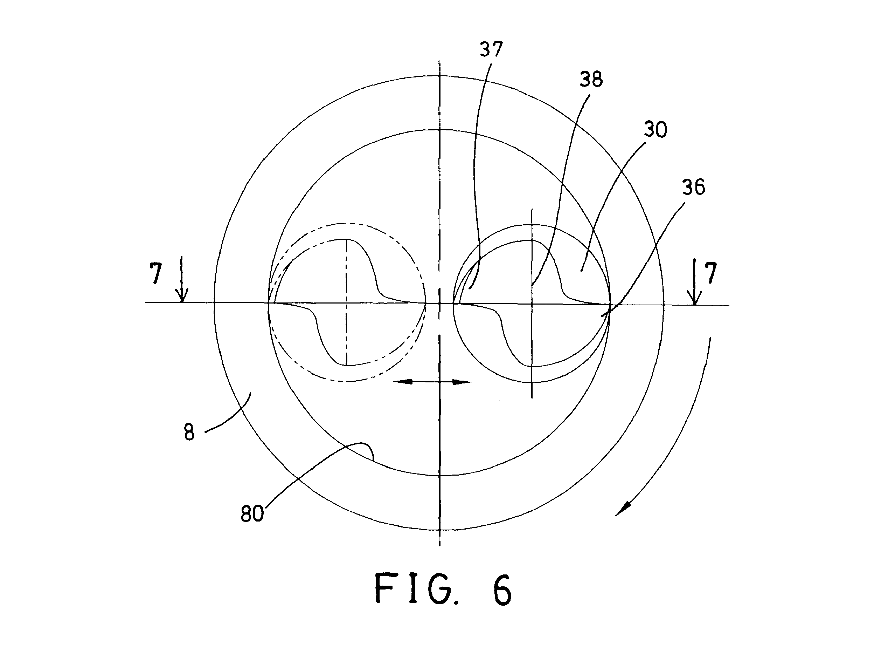

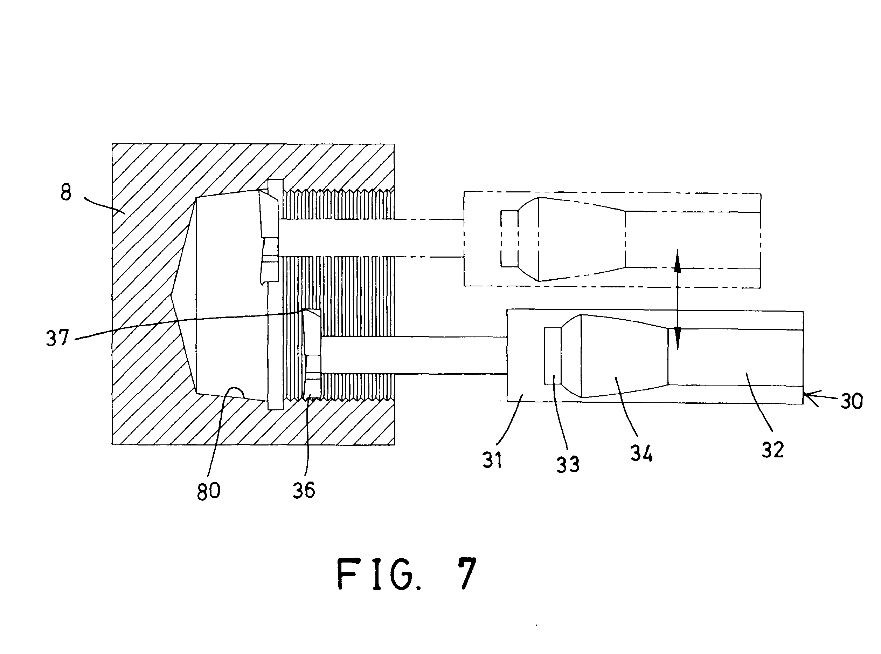

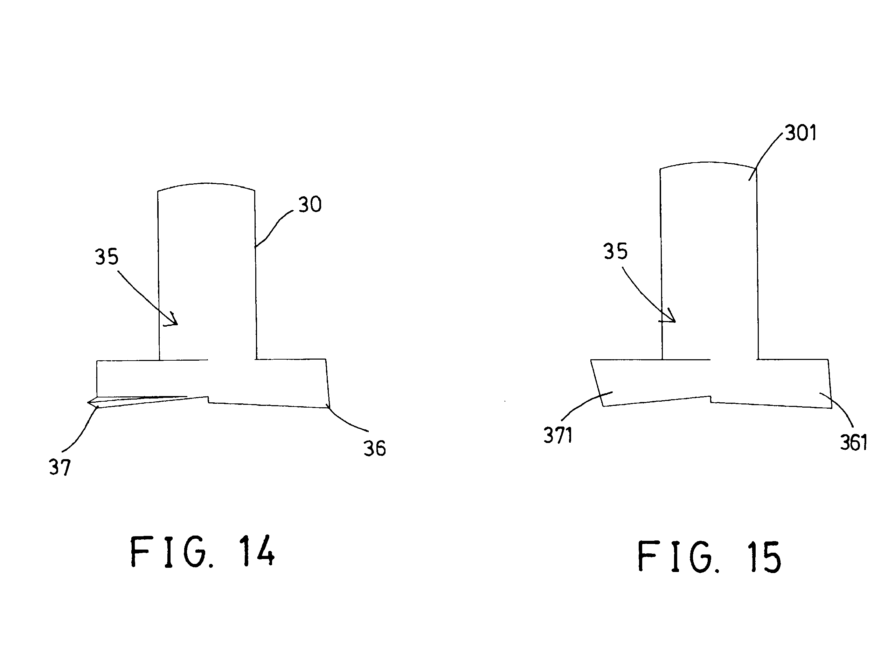

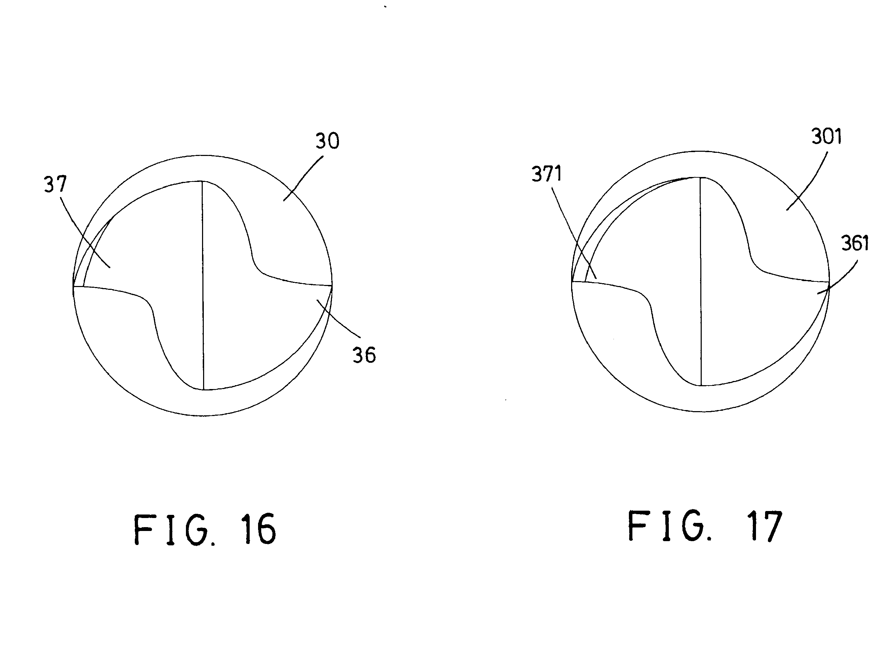

In operation, as shown in FIGS. 5-7, 14 and 16, one of the two different cutting edges or tool blades 36 may be engaged with an inner peripheral surface 80 of a work piece 8 in order to conduct a machining operation or procedure, such as a taping or threading operation by rotating the work piece 8 relative to the tool member 30, or the tool member 30 may be moved laterally relative to the work piece 8 in order to engage the other cutting edge or tool blade 37 with the inner peripheral surface 80 of the work piece 8 so as to conduct the other machining operation or procedure, such as the milling or cutting operation by rotating the work piece 8 relative to the tool member 30.

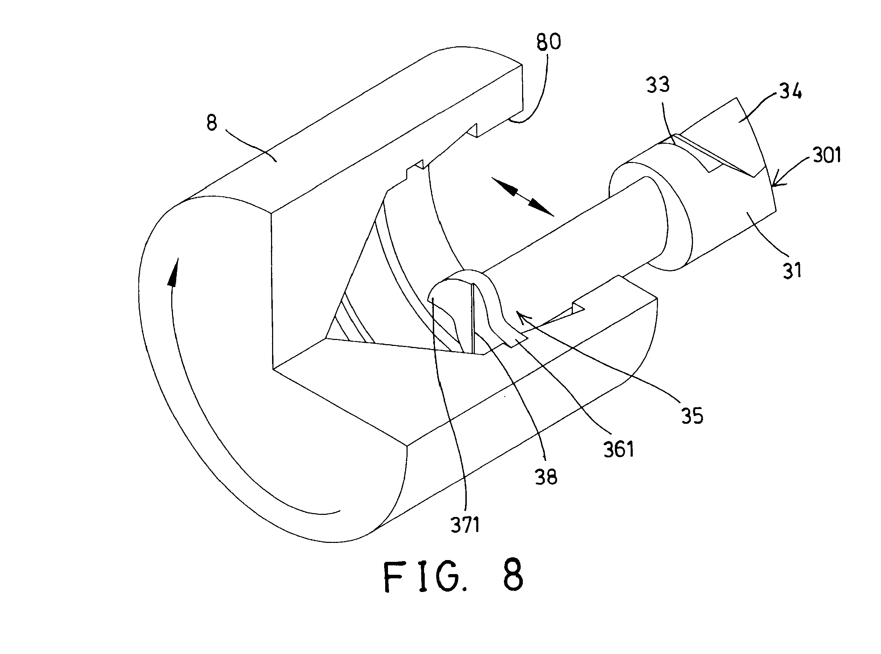

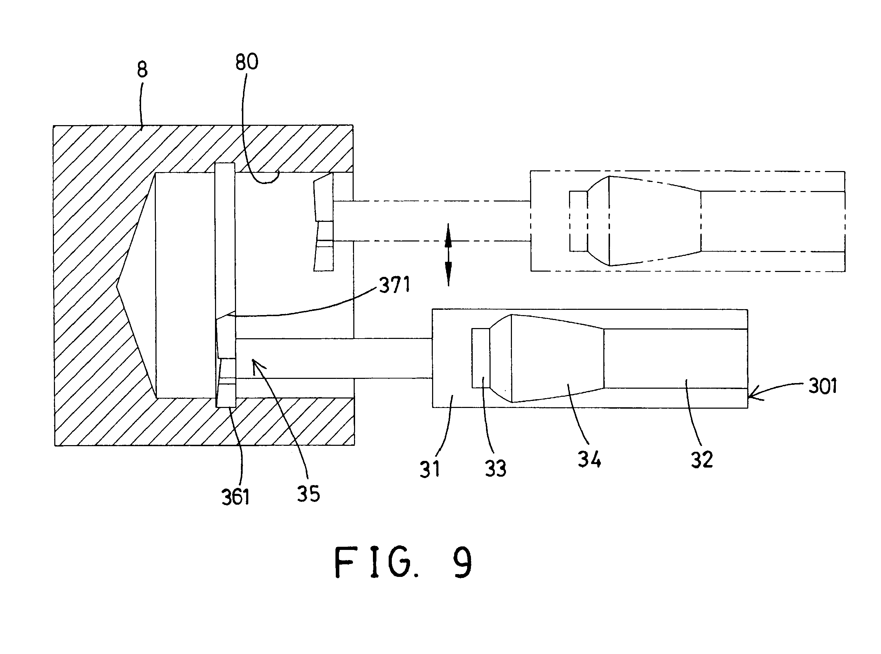

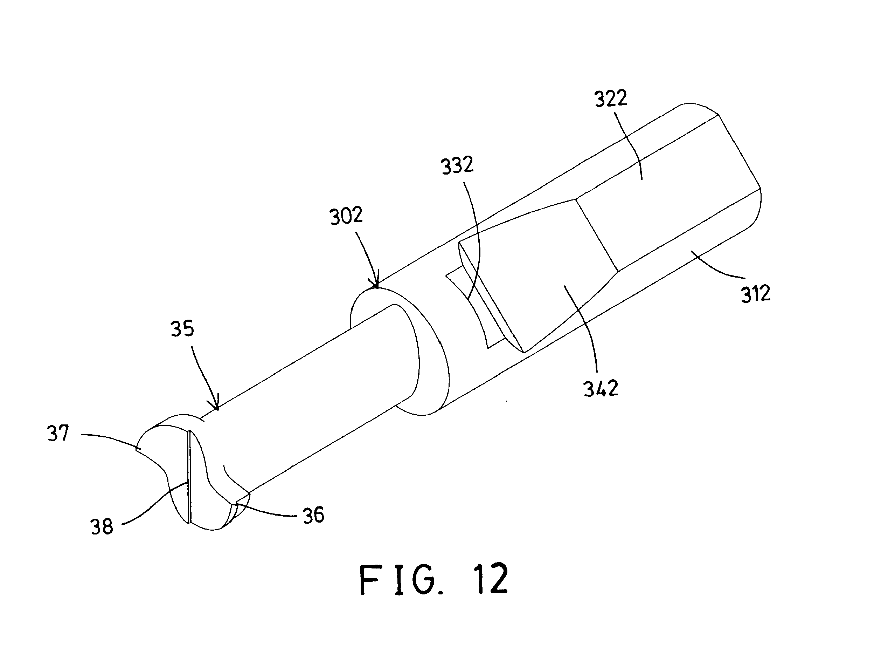

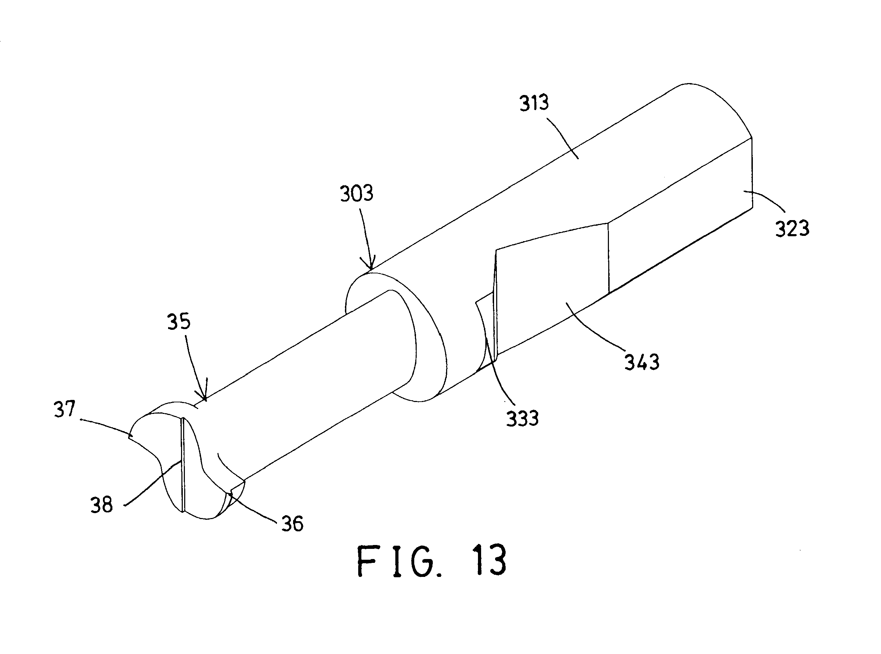

Alternatively, as shown in FIGS. 8-9, 15, and 17, the cutting edges or tool blades 361, 371 of the tool member 301 may be formed into different cutting edges or tool blades from that shown in FIGS. 5-7, 14 and 16, for conducting different machining operations or procedures, such as the milling or cutting or boring operation by rotating the work piece 8 relative to the tool member 301. Further alternatively, as shown in FIGS. 12 and 13, the flat surface 322, 323 and/or the anchoring shoulder 332, 333 and/or the ramp 342, 343 of the shank 312, 313 or of the tool member 302, 303 may be formed or provided at different angular position relative to the cutting edges or tool blades 36, 37 and/or the reference line 38, or angularly offset from the cutting edges or tool blades 36, 37 and/or the reference line 38 of the tool member 302, 303 for suitably engaging with the fasteners 27, 28 and/or the flat surfaces 24 of the barrel 20 and for securing the tool member 30, 301, 302, 303 to the barrel 20 at different angular positions.

It is to be noted that the two different cutting edges or tool blades 36, 37 of the tool member 30 may be moved laterally relative to the work piece 8 in order to engage either of the cutting edges or tool blades 36, 37 with the inner peripheral surface 80 of the work piece 8 so as to conduct different machining operation or procedure, such as the milling or cutting or taping or threading operation by rotating the work piece 8 relative to the tool member 30. It is simple to move the tool member 30 laterally relative to the work piece 8 in order to engage either of the cutting edges or tool blades 36, 37 with the inner peripheral surface 80 of the work piece 8 such that the tool device and the machine tool apparatus may be easily operated by the users.

Accordingly, the tool device includes two different cutting edges or tool blades for conducting different machining operations or procedures and for allowing the tool device and the machine tool apparatus to be easily operated by the users.

## Claims

1. A tool device comprising:
a barrel including a chamber formed therein, and
a tool member including a shank engaged into said chamber of said barrel and secured to said barrel with a fastener, and including a free end having two different tool blades formed on said free end of said tool member for conducting different machining operations.

2. The tool device as claimed in claim 1, wherein said tool blades are selected from boring, taping, threading milling, or cutting tool blades.

3. The tool device as claimed in claim 1, wherein said tool member includes a reference line formed and arranged between said tool blades.

4. The tool device as claimed in claim 1, wherein said tool member includes a ramp formed in said shank for engaging with said fastener.

5. The tool device as claimed in claim 1, wherein said barrel includes a flat surface formed therein, and said tool member includes a flat surface formed therein and engaged with said flat surface of said barrel to secure said tool member to said barrel and to prevent said tool member from rotating relative to said barrel.

6. The tool device as claimed in claim 1, wherein said tool member includes an anchoring shoulder formed therein, and said barrel includes a front end engaged with said anchoring shoulder of said tool member for anchoring said tool member to said barrel and for preventing said tool member from sliding longitudinally relative to said barrel.

7. The tool device as claimed in claim 1, wherein said tool blades are formed by grinding technical processes.
